Europäisches Patentamt

European Patent Office

Office européen des brevets

(19)

(11) Publication number: **0 331 249**
**A2**

# (12) EUROPEAN PATENT APPLICATION

(21) Application number: **89200452.4**

(51) Int. Cl.4: **B23Q 3/18**

(22) Date of filing: **22.02.89**

A request for correction of the claims has been filed pursuant to Rule 88 EPC. A decision on the request will be taken during the proceedings before the Examining Division (Guidelines for Examination in the EPO, A-V, 2.2).

(30) Priority: **29.02.88 CN 88100600**

(43) Date of publication of application:
**06.09.89 Bulletin 89/36**

(84) Designated Contracting States:
**DE GB IT**

(71) Applicant: **CHINA NATIONAL AERO-TECHNOLOGY IMPORT AND EXPORT CORP.**
**P.O. Box 647**
**Beijing(CN)**

Applicant: **QING-YANG MACHINE WORKS**
**P.O. Box 37**
**Qing-zhen Gui-Zhou Province(CN)**

(72) Inventor: **Changxiang, Xu**
**P.O. Box 37, Qing-zhen County**
**Gui-Zhou Province(CN)**
Inventor: **Qiulin, Yu**
**P.O. Box 37, Qing-zhen County**
**Gui-Zhou Province(CN)**
Inventor: **Ruixing, Zhuo**
**P.O. Box 37, Qing-zhen County**
**Gui-Zhou Province(CN)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Modular way and elements for setting fixed-angles of modular tools.

(57) A modular angling way and system for setting fixed angles or revolving triads of interlocking holes of a hole type modular tooling system which are critically embodied in seven fixed-angle setting disks in each of which there are a few triads of holes that form certain angles. Selective use of not more than two of four disks can set up any fixed angles in 0.5° increments , or selective use of not more than four of the seven disks can set up all the fixed angles in 30″ increments. This modular angling system , over the available technology, has the superiority that it can offer full angular adjustability, and permit precise and fast setups of small and compact constructions with good rigidity and stability.

FIG.2

## MODULAR WAY AND ELEMENTS FOR SETTING FIXED-ANGLES OF MODULAR TOOLS

This invention relates to jigs and fixtures , and particularly to a novel modular angling way and system for setting fixed-angles or revolving triads of interlocking holes of a hole type modular tooling system.

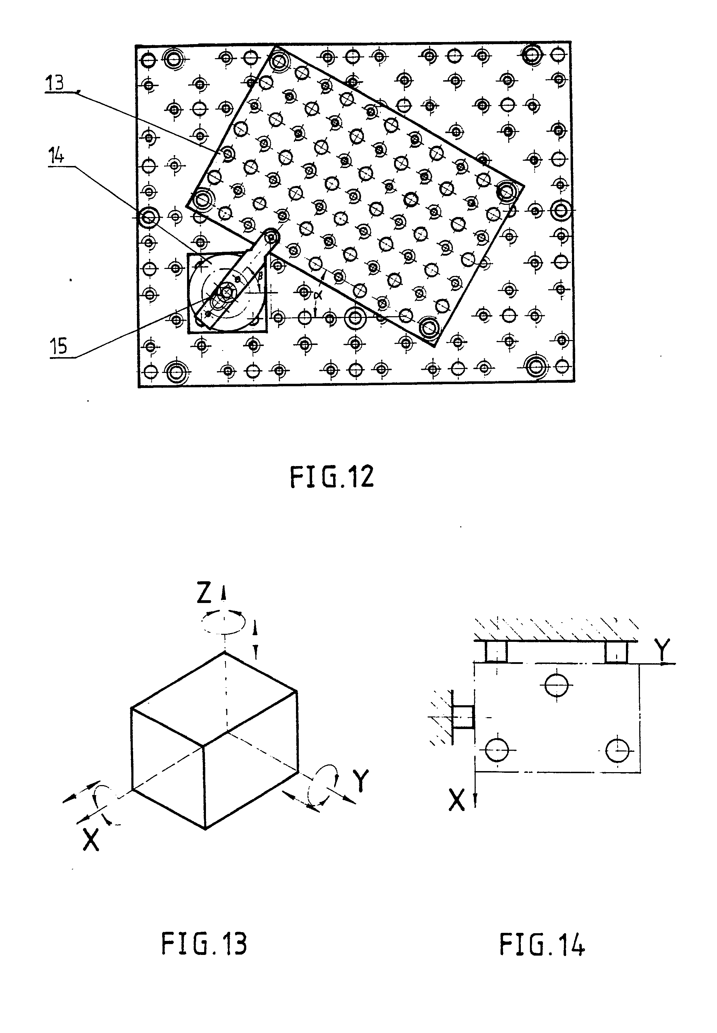

An unrestricted workpiece has six degrees of freedom with respect to the axes of a coordinate system : three along-axis-moving degrees and three around-axis-revolving degrees ( see Fig. 13 ). For the workpiece to be machined , the relative degrees of freedom must be restricted by a jig or fixture (see Fig. 14 ). So , evidently , if any workpiece is to be fixtured in a modular tooling system , the interlocking features of the system must be able to freely move along and revolve around the axes for the features to be adjusted where they are necessary for constructing fixture bodies and fixing locators or clamps. In othre words , a good modular tooling system should have two kinds of adjustability , along and around the coordinate axes. Since the advantage of slots is that they offer adjustability along axes , and holes do around axes, the available hole type modular tooling system must be advanced to offer the full adjustability by:

* introducing slots into the hole type system to solve its problem of adjustability along axes,
* bringing the advantage of adjustability around hole axes into full play.

The solution of adjustability around axes is covered in the scope of this patent application , and along axes is covered in a seperate patent application.

Since the above-mentioned principles for mudularizing of jigs and fixtures are advanced by the inventors after their thorough study of the available modular tooling technology, this invention resulting from the principles is a result of the available technology developing from the perceptual to the rational stage.

There have been many styles of fixed- angle constructions in the scope of available jigs and fixtures , but generally speaking these constructions may be devided into three types: dedicated, adjustable and modular, and the adjustable unit may further be divided into the direct adjustor and the comparator adjustor. The dedicated type is a kind of unreadjustable constructions fabricated specially for a certain workpiece and operation. The adjustable type is a kind of units adjustable to the change of workpieces and operations. The modular construction is what is assembled with premanufactured modules from a modular angling system , and dismountable for subsequent assemblies after use. The direct adjustor is a unit adjustable to a certain angle without rigging and indicating , and the comparator-adjusted tpye must be by rigging and indicating. United States patents US3 ,165 ,840 , US3 ,736 ,666 and US4 ,341,020 are of the direct adjustor type , while the present invention is of the modular angling type. The dedicated construction can provide a more compact and more rigid structure than the adjustable can , but can not offer angular adjustability and modularity. The comparator- adjusted unit can provide stepless angles with a compact construction over the direct adjustor , but can not be set up precisely and fast because of rigging and indicating , and can not offer rigidity and stability because of holding only by friction. A complete modular angling system should comprise a set of angular modules that can selectively be assembled into various constructions of different angles without readjustability , that is , the modular angling system may be a complete system which can offer advantages of what the adjustable unit can , and the assembled modular constructions may be the same as the dedicated construction is. However, of the available hole type modular tooling systems there has been no one which can provide the modular style of angular constructions , and of the available slot type modular tooling systems there have been only one or two systems which have been using fixed-angle setting pads or support in some common angles that do not essentially have angular modularity ; in all the available systems including hole and slot types , what has been in common use is the adjustable angular unit, that is , almost none of the available systems has related to the modular anglig system.

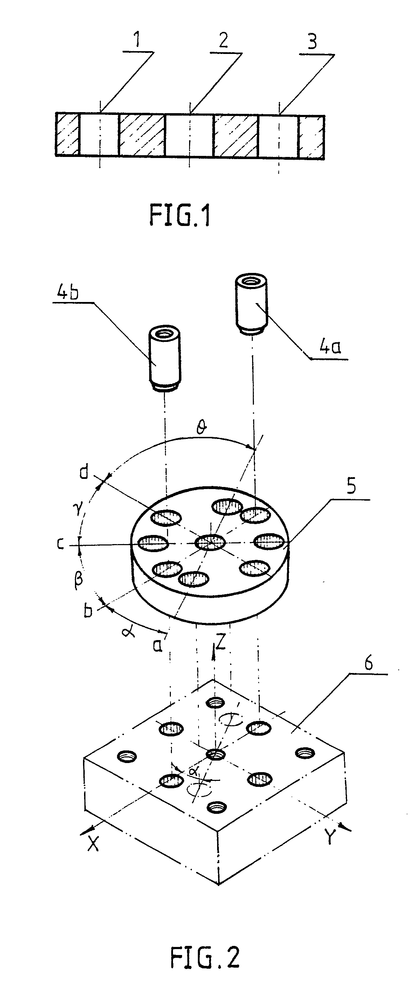

The object of the inventoin is to provide a modular angling way and sytem for setting fixed-angles or revolving triads of interlocking holes (see Fig. 1) of a hole type modular tooling system , so as to bring the advantage of adjustability around hole axes into full play , and thus to rationalize fixed-angle constructions of modular tools.

In accordance with the modular angling way of the invention , we can make the triad of interlock holes of a modular tooling system turn around the triad symmetrical centre line in a fine angle increment, or set up a great number of fixed angles of modular tools by combination of a few angles formed by triad-hole centre lines in a few fixed-angle setting disks or by combination of these angles with the datum coordinate angle (90°) (see Fig. 2). To set up a certain fixed-angle , we only need to selectively make some of the said disks into combination. The disks in combination and another module on the upper disk are located by dowel pins and fastened by one bolt on the datum along the symmetrical centre line. Every disk and its every locating hole are marked by codes , and the disks needed and their dowelling relationship can be found out from dowelling formulas in tables or CAD library.

The modular elements or the modular angling system of the invention mainly comprises a few fixed-

2

angle setting disks in each of which there are a few triads of interlock holes which form certain angles. The said triad has two qualified holes which are lined symmetrically at a through hole (see. Fig.1), but all the through holes in each disk coincide as one hole, one centre hole of the disk. The said angles are designed according to the principle of setting more angles with less disks.

In the Drawings:

Fig. 1 is the sectional view of the triad of interlock holes of the fixed-angle setting disk of the hole type modular tooling system in accordance with the invention;

Fig. 2 is the perspective view illustrating the principle for revolving of the triad of interlock holes or for setting fixed-angles of modular tools in accordance with the invention;

Figs. 3 to 9 are respectively the top views of the fixed-angle setting disks called $5^{\circ}$ , $1^{\circ}$ , $0.5^{\circ}$ , $10^{\circ}$ , $5^{'}$, $1^{'}$ and $0.5^{'}$ of the embodiment elements of the invention:

Fig. 10 is the perspective view illustrating the designation of the datum holes as X-X$^{'}$ and Y-Y$^{'}$ when the preferred embodiments are used to set fixed angles;

Fig. 11a is the perspective view of a verticl angular construction buit up by some selective disks in Fig. 3 to 9;

Fig. 11b is the exploded view of Fig. 11a;

Fig. 12 is the top view of a horizontal angular construction built up by means of some selective disks in Figs. 3 to 9;

Fig. 13 is the perspective view illustrating six degrees of freedom with an unrestricted workpiece;

Fig. 14 is the view illustrating six locating points with jigs and fixtures.

In Fig. 1 is the main interlocking feature or the triad of holes of the hole type modular tooling system in accordance with the invention, and holes 1 and 3 are qualified for dowel pins and hole 2 is through for bolts. In other words, the holes in the baseplates and constructing elements of the hole type system are spaced with one qualified hole after one tapped hole along coordinate axes. Since the qualified and the tapped holes are either the interlocking hole of modular fixture bodies or the fixing hole of locators and clamps , these holes must be able to freely move along and revolve around axes for the holes to be adjusted where they are necessary for constructing fixture bodies and for fixing locators or clamps. The typical adjustment around axes is making the triad of holes revolve around its own symmetrical centre line.

Fig. 2 is illustraing the common principle for revolving the triad of holes. When dowel pins 4a and 4b align triad b of disk 5 with triad x of datum 6 , the position of triad a of the disk is that of the triad x of the datum after it is revolved an angle $\alpha$ , that is , in this case the disk has made triad x of the datum revolve around its symmetrical centre line for an angle $\alpha$. In fact, using angles $\alpha$ , $\beta$ and $\gamma$ of disk 5 and the coordinate angle $90^{\circ}$ of datum 6 we can obtain almost 48 different angles below $360^{\circ}$ : $\pm\alpha$ , $\pm\beta$, $\pm\gamma$, $\pm\theta = 180^{\circ}$ $-\alpha$-$\beta$-$\gamma$ , $\pm (\alpha + \beta)$, $\pm(\beta + \gamma)$, $\pm(\gamma + \theta)$, $\pm(\theta + \alpha)$, $\pm(90^{\circ} \pm \alpha)$, $\pm (90^{\circ} \pm \beta )$, $\pm(90^{\circ} \pm \gamma)$, $\pm(90^{\circ} \pm \theta)$, $\pm[90^{\circ} \pm (\alpha + \beta)]$, $\pm[90^{\circ} \pm (\beta \pm \gamma)]$, $\pm[90^{\circ} \pm(\gamma + \theta)]$ and $\pm[90^{\circ} \pm(\theta + \alpha)]$.

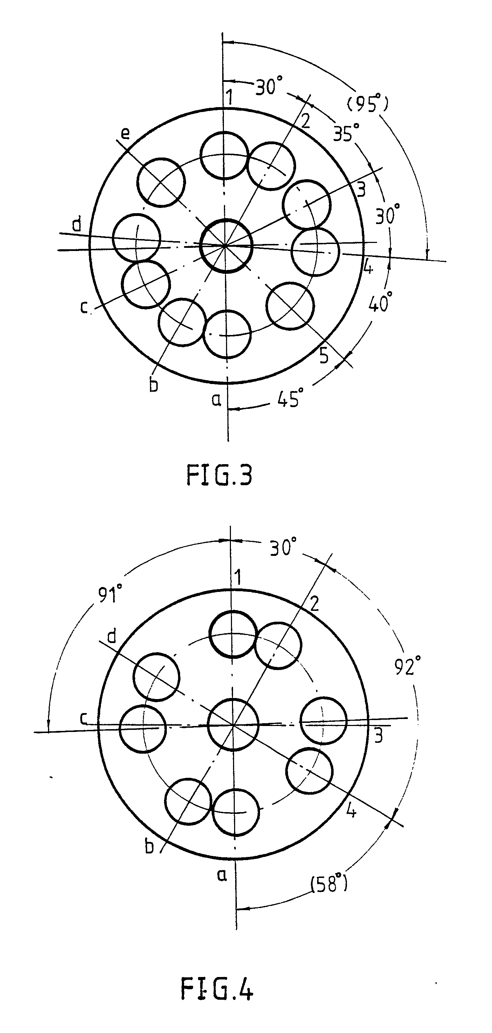

The disk called $5^{\circ}$ ( see Fig.3 ) has angles: $30^{\circ}$ between triads a-1 and b-2, $35^{\circ}$ between triads b-2 and c-3 , $30^{\circ}$ between triads c-3 and d-4 , and $40^{\circ}$ between triads d-4 and e-5. By means of this disk we can , on the datum, obtain fixed angles under $90^{\circ}$ : $5^{\circ}$ , $15^{\circ}$ , $20^{\circ}$ , $25^{\circ}$ , $30^{\circ}$ , $35^{\circ}$ , $40^{\circ}$ , $45^{\circ}$ , $50^{\circ}$ , $55^{\circ}$ , $60^{\circ}$ , $65^{\circ}$ , $70^{\circ}$ , $75^{\circ}$ , and $85^{\circ}$ , which are all angles except $10^{\circ}$ and $80^{\circ}$ in $5^{\circ}$ increments from $0^{\circ}$ . To provide the angles of $10^{\circ}$ and $80^{\circ}$ , we have arranged another disk named $10^{\circ}$.

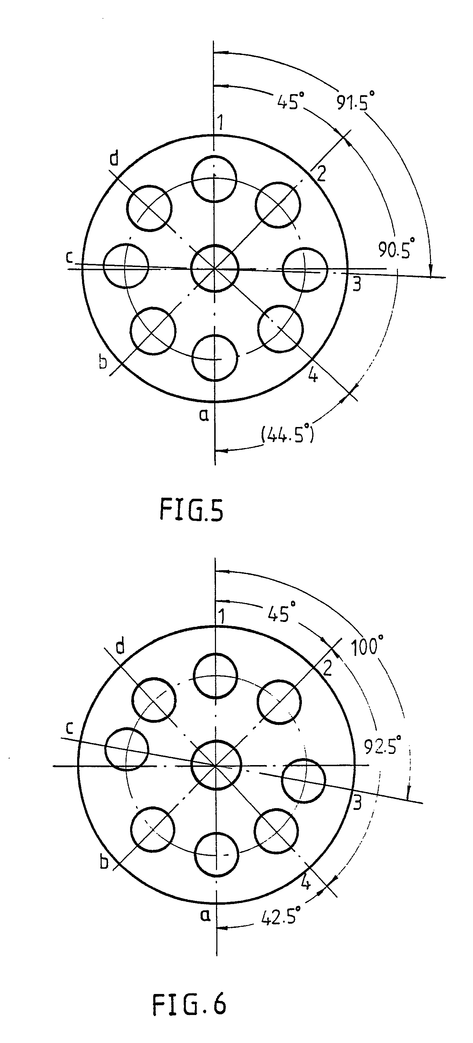

In the disk called $1^{\circ}$ (see Fig. 4), there are angles of $91^{\circ}$ or $89^{\circ}$ between triads a-1 and c-3 , and $92^{\circ}$ or $88^{\circ}$ between triads b-2 and d-4 . $91^{\circ}$ minus $90^{\circ}$ equals $1^{\circ}$ , $92^{\circ}$ minus $90^{\circ}$ does $2^{\circ}$ , $5^{\circ}$ minus $2^{\circ}$ does $3^{\circ}$ , $5^{\circ}$ minus $1^{\circ}$ does $4^{\circ}$ , $5^{\circ}$ plus $1^{\circ}$ does $6^{\circ}$ , ...etc. Thus we can, using this disk on the base of angies in $5^{\circ}$ increments from $0^{\circ}$ , obtain any angled in $1^{\circ}$ increments.

In the disk called $0.5^{\circ}$ ( see Fig. 5 ) , there are angles of $90.5^{\circ}$ between triads b-2 and d-4 , and $91.5^{\circ}$ between triads a-1 and c-3 , $90.5^{\circ}$ minus $90^{\circ}$ equals $0.5^{\circ}$ , $91.5^{\circ}$ minus $90^{\circ}$ does $1.5^{\circ}$ , $5^{\circ}$ minus $1.5^{\circ}$ does $3.5^{\circ}$ , $5^{\circ}$ minus $0.5^{\circ}$ does $4.5^{\circ}$ , $5^{\circ}$ plus $0.5^{\circ}$ does $5.5^{\circ}$ , and so on , so that if we have another disk providing $2.5^{\circ}$ , using the disk called $0.5^{\circ}$ and the disk having $2.5^{\circ}$ , we can have any angles with an odd degree of $0.5^{\circ}$ on the base of angles in $5^{\circ}$ increments from $0^{\circ}$ .

The disk in Fig.6 , named $10^{\circ}$ but actually used to provide the angles of $10^{\circ}$ and $2.5^{\circ}$ , has angles of $100^{\circ}$ between triads a-1 and c-3 , and $92.5^{\circ}$ between triads b-2 and d-4.

Since both the angle ending with $0.5^{\circ}$ and the angle ending with integral degrees are produced on the base of angles in $5^{\circ}$ increments from $0^{\circ}$ , setting any fixed angles in $0.5^{\circ}$ increments needs not more than 2 of 4 disks in Fig.3 to 6.

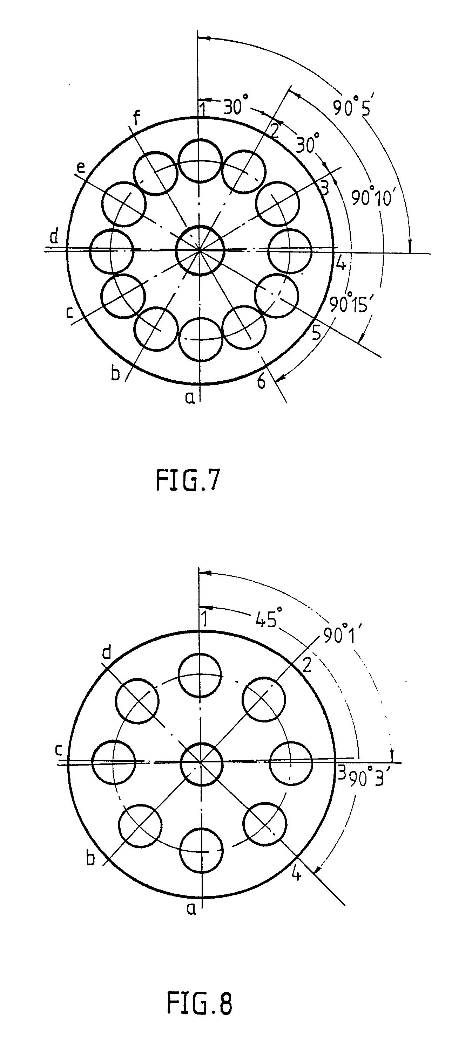

The disk called $5^{'}$ shown in Fig.7 has angles : $90^{\circ} 5^{'}$ between triads a-1 and d-4 , $90^{\circ} 10^{'}$ between triads b-2 and e-5, and $90^{\circ} 15^{'}$ between triads c-3 and f-6. $90^{\circ}$ from $90^{\circ} 5^{'}$ leaves $5^{'}$ , $90^{\circ}$ from $90^{\circ} 10^{'}$ does $10^{'}$ , $90^{\circ}$ from $90^{\circ} 15^{'}$ does $15^{'}$, $10^{'}$ from $30^{'}$ does $20^{'}$ , $5^{'}$ from $30^{'}$ does $25^{'}$ , $30^{'}$ plus $5^{'}$ equals 35$'$, ...etc. Thus we can , using this disk on the base of angles in 0.5$^\circ$ increments from 0$^\circ$ , obtain all the angles in 5$'$ increments.

In the disk called 1$'$ (see Fig. 8) , there are two angles, one 90$^\circ$ 1$'$ between triads a-1 and c-3, one another 90$^\circ$ 3$'$ between triads b-2 and d-4 , so that by means of this disk we can obtain all the angles in 1$'$ increments on the base of angles in 5$'$ increments from 0$^\circ$ as 90$^\circ$ 1$'$ minus 90$^\circ$ equals 1$'$ , 5$'$ minus 3$'$ does 2$'$ , 90$^\circ$ 3$'$ minus 90 does 3$'$ , 5$'$ minus 1$'$ does 4$'$, 5$'$ plus 1$'$ does 6$'$, ... etc.

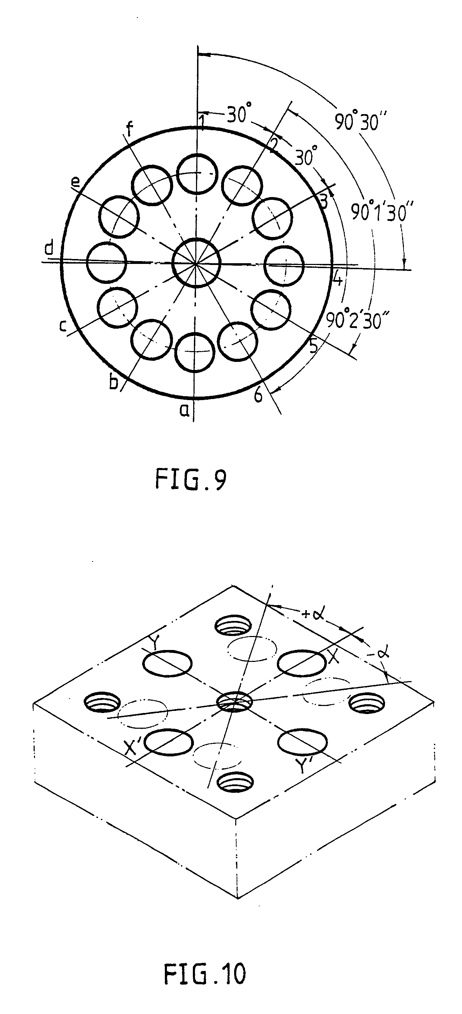

In the disk called 0.5$'$ (see Fig. 9) , there are angles of 90$^\circ$ 30$''$ between triads a- 1 and d- 4 , 90$^\circ$ 1$'$30$''$ between triads b-2 and e-5 , and 90$^\circ$ 2$'$30$''$ between triads c-3 and f-6, so that by using of this disk we can obtain any angles with an odd degree of 30$''$ on the base of angles in 5$'$ increments from 0$^\circ$ as 90$^\circ$ 30$''$ minus 90$^\circ$ equals 30$''$, 90$^\circ$ 1$'$30$''$ minus 90$^\circ$ does 1$'$ 30$''$, 90$^\circ$ 2$'$30$''$ minus 90$^\circ$ does 2$'$30$''$ , 5$'$ minus 1$'$30$''$ does 3$'$30$''$ , 5$'$ minus 30$''$ does 4$'$30$''$, 5$'$ plus 30$''$ does 5$'$30$''$, ...etc.

Since both the angle ending with 0.5$'$ and the angle ending with integral minutes are produced on the base of angles in 5$'$ increments from 0$^\circ$ , setting any fixed angles from 0.5$^\circ$ to 0.5$'$ increments further needs not more than 2 of 3 disk in Figs. 7 to 9.

Therefore , on the datum with coordinate angle (90$^\circ$ ), we can set up any fixed angles in 5$^\circ$ increments from 0$^\circ$ by using only one of the two disks in Figs. 3 and 6, any fixed angles in 1$^\circ$ increments from 0$^\circ$ by using not more than 2 of the three disks in Figs. 3, 4 and 6, any fixed angles in 0.5$^\circ$ increments from 0$^\circ$ by using not more than 2 of the four disks in Figs. 3 to 6 , any fixed angles in 5$'$ increments from 0$^\circ$ by using not more than 3 of the five disks in Figs. 3 to 7, any fixed angles in 1$'$ increments from 0$^\circ$ by using not more than 4 of the six disks in Figs. 3 to 8 , or any fixed angles in 0.5$'$ increments from 0$^\circ$ by using not more than 4 of the seven disks in Figs. 3 to 9. In other words , we can set up on the datum 43,200 different angles below 360$^\circ$ merely by combination of 18 effective angles in said seven disks , and not more than four disks participate in each combination and the total height of four disks is only 50 mm.

When using the preferred embodiments to revolve the triad of holes a fixed angle, we must:

1 , designate the datum holes as X-X$'$ and Y-Y$'$ and ensure that the angle $\alpha$ to be set is less than or equal to 45$^\circ$ from axis X-X$'$ ( see Fig. 10);

2, find out the dowelling formula for the above-confirmed angle $\alpha$ from a table or CAD library;

3, select and dowel the disks according to what is indicated by the above-got dowelling formula.

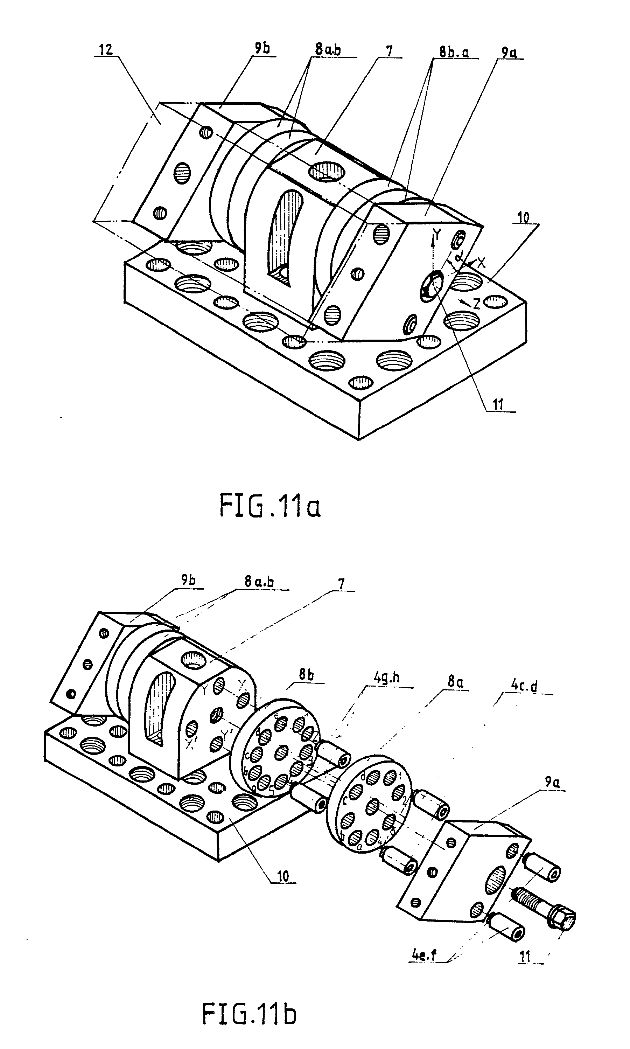

Fig. 11a illustrates a vertical angular construction set up with the preferred embodiments , and Fig. 11b is its exploded view. In this practical application, the angle $\alpha$ to be set is 41$^\circ$ 30$'$. The tabular dowelling formula for the angle is :

$$
\begin{array}{ccc}
\text{D} & \text{H322500} & \text{H322030} \\
\text{-----} \rightarrow & \text{------------} \rightarrow & \text{-----------} . \\
\text{Y}'\text{-Y} & \text{5-e / 4-d} & \text{3-c / 1-a}
\end{array}
$$

According to this formula, dowel disk 8b (H322500) on angling datum support 7 by aligning triads 5-e with Y$'$-Y , disk 8a (H322030) on disk 8b by aligning triads 3- c with 4-d and angling blocks 9a and 9b on disks 8a by aligning the qualified holes of the angling blocks 9a and 9b with triads 1-a, and then fasten the angling blocks 9a and 9b and the disks 8a and 8b on the angling datum support 7 by bolts 11. The angling datum support 7 is further dowelled and fastened on base plate 10 by other dowel pins and bolt. When dowelling and fastening baseplate 12 onto angling blocks 9a and 9b , we obtain the angular construction for developing of angle 41$^\circ$ 30$'$.

To set up a compound angle , we can selectively use again some disks either under angling datum support 7 to make it revolve around axis Y for another angle or like Fig. 12 to make baseplate 10 with the whole angular construction revolve for a fixed angle.

Fig. 12 illustrates a horizontal angular construction set up with the preferred embodiments . In this practical application, $\alpha$ is the final angle to be set, and $\beta$ is the conversion angle of $\alpha$. Jig plate 15 can slip in the direction of angle $\beta$ . When the bush hole of slipping jig plate 15 coincides with the relative qualified hole of revolving baseplate 13 , the baseplate 13 just revolves the angle $\alpha$.

Therefore , the modular angling system of the invention can offer full angular adjustability , and permit precise and fast setups of small and compact constructions with good rigidity and stability.

**Claims**

1. A mocular way for setting fixed-angles of modular tools, characterized in that:
We can make the triad of interlocking holes of a modular tooling system turn around the triad symmetrical centre line in a fine angle increment , or set up a great number of fixed angles of modular tools by combination of a few angles formed by trial- hole centre lines in a few fixed-angle setting disks or by combination of these angles with the datum coordinate angle 90° ; to set up a certain fixed-angle , we only need to selectively make some of the said disks into combination ; the disks in combination and another module on the upper disk are located by dowel pins and fastened by one bolt on the datum along the symmetricl centre line ; every disk and its every locating hole are marked by codes , and the disks needed and their dowelling relationship can be found out from dowelling formulas in tables or CAD library.

2. Modular elements designed in accordance with the way of setting fixed-angles of modular tools accoding to claim 1 , characterized in that:
it comprises a few fixed-angle setting disks in each of which there are a few triads of interlock holes which form certain angles ; the said triad has two qualified holes which are lined symmetrically at a through hole , but all the through holes in each disk coincide as one hole , one centre hole of the disk; the said angles are designed according to the principle of setting more angles with less disks.

3. A preferred modular way for setting fixed-angles of modular tools according to claim 1, characterized in that:
on the datum with corrdinate angle (90° ) we can set up any fixed angles in 5° increments from 0° by using only one of two disks, any fixed angles in 1° increments from 0° by using not more than two of three disks, any fixed angles in 0.5° increments from 0° by using not more than two of four disks , any fixed angles in 5′ increments from 0° by using not more than three of five disks , any fixed angles in 1′ increments from 0° by using not more than four of six disks , or any fixed angles in 0.5′ increments from 0° by using not more than four of seven disks.

4. Elements for setting fixed-angles of modular tools according to claim 2. characterized in that:
the angles of an elementary fixed-angle setting disk formed by the symmetrical centre line of the triad hole are selected from 30° , 35° , 40° , and 45° , and whereby we can obtain angles in 5° increments from 0° .

FIG.1

FIG.2

FIG.3

FIG.4

FIG.5

FIG.6

EP 0 331 249 A2

FIG.7

FIG.8

FIG.9

FIG.10

EP 0 331 249 A2

FIG.11a

FIG.11b

FIG.12

FIG.13

FIG.14